Europäisches Patentamt

European Patent Office

Office européen des brevets

(11) Publication number : **0 479 529 A2**

# EUROPEAN PATENT APPLICATION

(21) Application number : **91308938.9**

(22) Date of filing : **30.09.91**

(51) Int. Cl.⁵ : **B61L 23/34**

(30) Priority : **01.10.90 GB 9021345**

(43) Date of publication of application :
**08.04.92 Bulletin 92/15**

(84) Designated Contracting States :
**DE FR IT**

(71) Applicant : **GEC-MARCONI (HOLDINGS) LIMITED
The Grove, Warren Lane
Stanmore, Middlesex HA7 4LY (GB)**

(72) Inventor : **Nicholls, Malcolm Richard
19 Lynnet Close
Bushey, Hertfordshire WD2 1AX (GB)**

(74) Representative : **George, Sidney Arthur
The General Electric Company p.l.c. GEC
Patent Department(Wembley Office) Hirst
Research Centre East Lane
Wembley Middlesex, HA9 7PP (GB)**

(54) Vehicle control system.

(57) A railway signalling system which uses direct ratio communication between trains. Each train is fitted with two sensor units (10, 11), one at the front one at the rear. Each unit determines the host train's speed and position. The rearward unit (11) transmits (14) its train speed and position by means of a rearward-directed data signal for detection (15) by the forward unit (10) on any following train within range. The forward unit (10) processes (25, 26, 27) the data received from the train ahead and its own train data to determine whether a hazardous situation exists, and generates a control output (28) accordingly. The speed measurement uses doppler techniques, whereas vehicle position is determined by interrogating passive trackside transponders (12). Operation at millimetre wave frequencies is preferred.

FIG.2

EP 0 479 529 A2

This invention relates to a vehicle control system for track-based vehicles such as trains, and, in particular, although not exclusively, for determining whether a hazardous situation exists in relation to two vehicles on the same or connected track.

Conventional control systems for trains rely on the transmission of track occupancy information by means of the rails or trackside cabling. Such systems require extensive regular trackside maintenance to ensure safe operation. Maintenance and safety checks of trackside equipment are inevitably disruptive of service. It is desirable, therefore, to have a control system in which as much as possible of the equipment is vehicle-mounted and can be serviced in the workshop.

It is an object of the present invention to provide an improved vehicle control system.

According to the invention there is provided a vehicle control system for track-based vehicles, comprising, for each vehicle, means for interrogating transponders disposed at intervals along the track to obtain own vehicle position, means for determining own vehicle speed, radio means for communicating with a neighbouring vehicle to derive the speed and position of that neighbouring vehicle, and control means responsive to the speed and position of the two vehicles to determine whether a hazardous situation exists and to provide a warning or control output accordingly.

The radio means preferably comprises a transmitter directed rearward towards any rearward neighbouring vehicle to transmit position and speed information, and a receiver directed forward towards any forward neighbouring vehicle to receive position and speed information from that forward vehicle.

Preferably at least one of the transmitter and the receiver is part of a unit adapted to determine own vehicle speed by measurement of doppler frequency.

Preferably at least one of the transmitter and the receiver is part of a unit adapted to interrogate said transponders.

The receiver and the transmitter are preferably disposed relatively forward and rearward on the vehicle respectively.

In one embodiment of the invention the receiver is associated with a forward-directed transmitter, the rearward transmitter being associated with an adjacent transponder mounted on the vehicle. This transponder is disabled when illuminated by the output signal of the rearward transmitter and enabled in the absence of such illumination to emit a fault signal when interrogated by the forward-directed transmitter of a rearward neighbouring vehicle, the control means being responsive to the fault signal. The adjacent transponder is preferably adapted to reflect an incident interrogating signal at the incident frequency when in the disabled state, and to emit a fault signal of frequency higher than the incident frequency when in the enabled state.

The track transponders may also provide local track layout information and/or local speed restriction information.

In a system in which track layout information is provided by the transponders, the control means may be responsive to a plurality of transmitters disposed along the track, each transmitter being associated with a local set of track switching points and being adapted to emit a localised output signal indicative of the state of its switching points.

In such a system, the control means is preferably adapted to receive data relating to the intended route of the host vehicle, to determine from the received position, track layout and points data the actual route which will be taken, and to provide a warning or control output when the two routes differ.

The control means is also preferably adapted to determine, in respect of a forward neighbouring vehicle which has communicated its position and speed, whether that neighbouring vehicle is following the same route as will be taken by the host vehicle.

A vehicle control system in accordance with the invention will now be described, by way of example only, with reference to the accompanying drawings, in which:

Figure 1 shows an outline arrangement of the system fitted on two trains; and

Figure 2 shows block diagrams of a forward sensor unit and a rearward sensor unit for fitting respectively at the front and rear of each train.

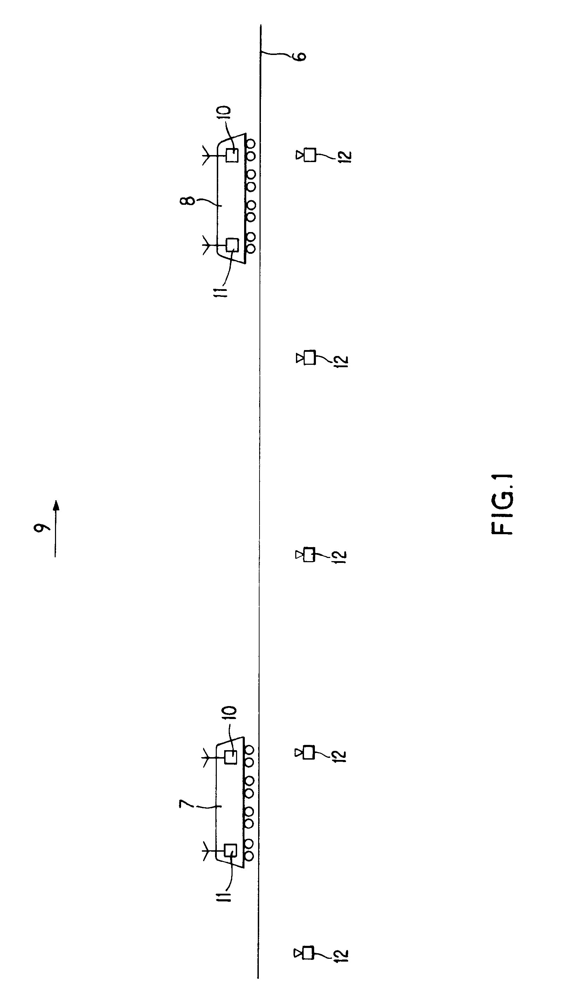

In Figure 1 there are two trains 7, 8 (shown as single vehicles for simplicity) travelling on a common track 6 in the direction indicated by the arrow 9. Each train is fitted with two independent sensor units, a forward sensor unit 10 mounted towards the front of the train and a rearward sensor unit 11 mounted towards the rear of the train. The two units 10, 11 permit radio communication between neighbouring trains. In addition, each unit is adapted to interrogate passive transponders 12 which transmit position data to the train. The transponders are positioned at intervals along the track 6, preferably at the trackside, adjacent the rails, although they could alternatively be located between the rails.

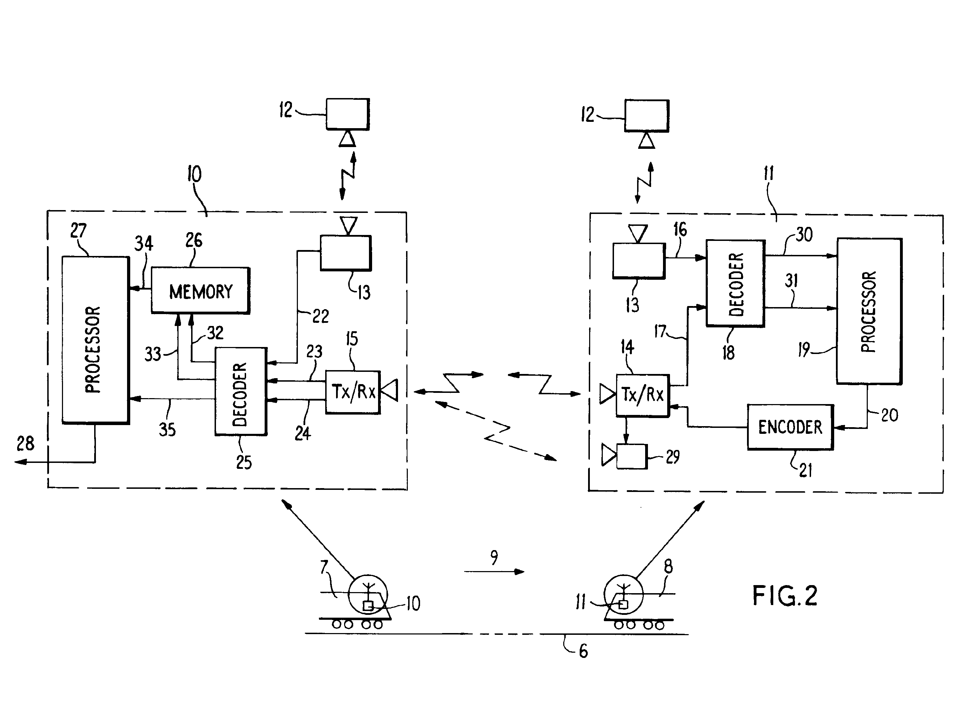

Figure 2 shows details of the two sensor units 10, 11 in block diagram form. It will be assumed for the purpose of the following description that the two units are mounted on different trains. Thus, in Figure 2 the rearward unit 11 is mounted at the back of the leading train 8, whilst the forward unit 10 is mounted at the front of the neighbouring following train 7. The proximity of the two units in Figure 2 is, of course, exaggerated.

Each sensor unit is adapted to determine both the position and the speed of its host vehicle. Position information is acquired from an adjacent trackside transponder 12 by means of an interrogator 13. On being interrogated by a passing train, the transponder 12 emits a localised output signal carrying predetermined position information. The power required to generate this signal is derived from the interrogator beam, the transponder itself requiring no power supply. The signal from the transponder 12 comprises a multi-digit digital word. The data captured by the interrogator 13 is stored for subsequent use. Speed measurement is made by means of a radio transceiver, 14 in the rearward unit 11 and 15 in the forward unit 10, which determines the speed in known manner from the doppler frequency of echo signals from the ground.

In the leading train rearward unit 11, the transceiver 14 also emits a rearward-directed data signal, comprising the position and speed of the host train 8. The position and speed data are derived respectively from the outputs 16 and 17 of the interrogator 13 and the transceiver 14 by means of a decoder circuit 18. The train position is obtained from the trackside transponder signal whereas the train speed is obtained from the doppler shifted transceiver return signal from the ground. The position and speed information is supplied on lines 30 and 31 respectively to a processor 19, which generates a composite signal comprising a multi-digit (e.g. 8-bit) digital word on output line 20. The position information component of the word is 'up-dated' as the train progresses along the track by integrating the measured speed, this 'dead-reckoning' function being performed by the processor 19. An encoder circuit 21 modulates the output of the transceiver 14 in dependence upon the composite signal so that the leading train speed and position information is transmitted back to any following neighbouring train via the data signal. The modulation may be, for example, simple FM or phase-switched FM, and the digital word may be transmitted in bursts so that the doppler measurement can be made in the quiet intervals between the data bursts. Thus, the signal emitted by transceiver 14 serves two purposes : to determine the leading train speed by measurement of doppler frequency and to transmit back the leading train speed and position data for reception by the transceiver 15 on the forward unit of any following neighbouring train, i.e. unit 10 on train 7 in the specific example.

The transmit beam of the transceiver 14 is directed substantially horizontally to permit transmission of the data signal to any following train. The doppler return from the ground is obtained from the main beam sidelobes. The lower directional gain from the sidelobes compared with the main beam is offset by the higher magnitude of the local echo signals. Tailoring of the beam shape allows optimisation of the two conflicting signal requirements.

If the leading train 8 is stationary so that there is no doppler signal produced on line 17, this information is taken into account by the processor 19. The data signal emitted by the transceiver 14 then indicates the position of the train and that it is not moving.

In the following train forward unit 10, the transceiver 15 is primarily concerned with reception of the data signal from the leading neighbouring train 8. The transceiver 15 also produces a forward-directed signal for determination of the speed of train 7 from measurement of doppler frequency in the same manner as the rearward unit transceiver 14. The transceivers 14 and 15 may operate at different carrier frequencies to avoid the possibility of confusion between the data signal from a neighbouring train and the reflected doppler signal from the ground. Preferably, however, the two signals are distinguished by the use of different modulation frequencies or by different modes of modulation. Thus, the transceiver 15 is adapted to detect and separate two distinct signals: the return signal of its own transmission for doppler speed determination and the data signal emitted by the leading neighbouring train 8 carrying the coded position and speed data of that neighbouring train.

The transceiver 15 comprises a single receiver for the two signals. The comparatively low-frequency doppler signal is separated from the higher frequency data signals by suitable filters (not shown) to produce the outputs 23 and 24 as shown. The output 23 at the doppler frequency and the output 24 of any detected data signal are fed to a decoder circuit 25. The output 22 of the interrogator 13 is also supplied to the decoder circuit 25. In similar manner to that of the decoder circuit 18 in the rearward unit 11, the decoder circuit 25 determines position and speed of the host train 7 and provides this data on lines 32 and 33 respectively to a memory circuit 26. The content of the memory circuit 26 is available as an input 34 to a processor 27. Again the position information, provided by the interrogator 13 on line 22, is up-dated by the processor as the train 7 progresses along the track by integrating the measured speed. Information about the position and speed of the leading neighbouring train 8 is extracted by the decoder circuit 25 from the received data signal to provide a second input 35 to the processor 27. The processor 27 determines from the host train 7 data and the neighbouring train 8 data whether a hazardous situation, an impending collision for instance, exists (or soon will exist) in respect of the two trains, and provides a warning or control output 28 accordingly. The output 28 may be used to provide a visual or audible warning to the driver of train 7. Alternatively, or additionally, the output 28 may be used directly to control the progress of train 7 via its braking system.

A vehicle control system as described above has been realised using radar equipment operating at 94 GHz. The particular operating frequency adopted is not critical to system performance, but frequencies corresponding to the millimetre waveband are preferred, enabling the production of a narrow short-range beam which reduces unwanted interference. Such frequencies also result in higher frequency doppler signals, which can be more easily processed, and permit higher data bandwidths to be used. A further advantage of using frequencies of this order is that the required components are small and lightweight, enabling the sensor units to be conveniently fitted at the front and rear of a train and easily removed for servicing or replacement as necessary.

It will be appreciated that the speed inputs to the processors 19 and 27 are not essentially derived from doppler frequency measurement of the reflected transceiver signals. Thus, the speed inputs may be derived from a separate transducer fitted on the train, which may itself be a doppler speed sensor. If the transceivers 14, 15 are not used for speed measurement they may be replaced by a transmitter in the rearward sensor unit 11 to transmit the data signal and by a receiver in the forward sensor unit 10 to receive the data signal.

The system operation is dependent upon transmission of the data signal by the transceiver 14 in the rearward unit 11 of a leading train. If the transceiver 14 were to fail, then a following train could approach the leading train without being aware of its presence. Thus, it is desirable to provide a fail-safe warning of failure of the transceiver 14. For this purpose each rearward unit 11 may include an associated transponder 29 mounted adjacent the transceiver 14. The transponder 29 is adapted to assume one of two operating states. Under normal operating conditions, the high level of RF illumination by the output signal of the associated transceiver 14 is sufficient to maintain the transponder 29 in a 'disabled' or passive state in which any incident signal emitted by the transceiver 15 in the forward unit of a following train will be reflected at the incident frequency (including any doppler shift). Should the transceiver 14 fail, the high level illumination of the transponder 29 by the local signal will fall substantially, leaving only the remote signal originating from the following train. Under these circumstances the transponder 29 assumes an 'enabled' or active state in which it 'reflects' any incident signal only at a higher harmonic frequency, such as the second harmonic. Thus, the detection of the harmonic return by the transceiver 15 in a forward unit 10 will indicate that the rearward unit of a train ahead is not functioning properly.

The processor 27 is responsive to the harmonic return to generate a fault signal on the control output 28. Transponders which operate in the above-described manner of transponder 29 are known.

In addition to providing train position identification, the coded output of each trackside transponder 12 may carry information about the local track layout ahead, including the location of track switching points and the speed restriction applicable at the points. If the processor 27 in the forward unit 10 is supplied with stored data relating to the planned route of the train, the unit can take account of the track layout data in assessing the threat presented by a neighbouring train following a different route. For example, if the following train is approaching a fork junction having, say, two branches, the data signal from a leading train will not be relevant if it is on a different branch to that which the following train is intended to follow.

A subsidiary function of the processors 19 and 27 may be to check whether the host train speed is compatible with the particular track section occupied or points being crossed and to provide a warning signal to the driver if the train speed is unsafe. When there are temporary speed restrictions, for example, due to maintenance work being carried out on the track, the local transponders may be replaced or re-programmed so that their output codes indicate the new conditions which apply.

There is considerable interest in the provision of a railway signalling system which indicates the state of track switching points. In existing signalling systems this information is only available to the train driver at the last trackside signal which he passes before reaching the points. This signal may be up to 1km from the points. It is known that points which have moved to one desired position can through various mechanisms move either back to their original setting or to some indeterminate position. This is the principle cause of train derailments. This problem can be considered by way of illustration in the context of the above example in which a train is approaching a fork junction. If the points at the junction are incorrectly set so that the following train will be routed to the same branch as the leading train, it will be apparent that a risk of collision exists. Accordingly, confirmation to the driver of the points setting, which can be provided continuously as the train approaches the junction, is of considerable value.

Therefore, in a further development of the system so far described, data about the state of switching points is transmitted to the train from the trackside. This data is provided by a transmitter located at each set of points. Each transmitter is adapted to emit a signal which identifies the particular set of points and indicates how they are set. The signal is localised in nature but of sufficient strength to be detected by an approaching train at a reasonable distance. The signal may have a carrier frequency which is dependent on the points setting, the carrier being modulated with an identification code of the points. The emitted signal may be generated continuously for reception either by the sensor unit transceiver 15 or by a separate dedicated receiver. Alternatively, the signal may be generated only on interrogation by the interrogator 13 on sensor unit 10.

The trackside transmitters thus enable any change in the points setting to be detected by the forward-mounted sensor unit 10 as the train approaches the points, the processor 27 producing a warning or control output accordingly. Further, in a system where the processor is provided with stored data relating to the train's planned route, the points signal provides a check that the intended route will be followed. This ensures that a leading train which has been detected but subsequently discounted because it is on a different route, will be treated as a danger if it is apparent that the following train will deviate from its planned route.

The basic system described with reference to Figure 2 may be used to prevent buffer collisions in stations. A transponder 12 may be arranged at the entry to the station to indicate the distance to the buffers, so that in combination with the doppler speed measurement provided by the sensor unit, a warning of excessive speed of approach could be given to the train driver.

Determination of the speed and position of a vehicle by both the reaward and forward units involves some duplication of the work done by the system. Nonetheless, this is the preferred arrangement since it allows the two units to be truly independent, failure of one unit on a vehicle not affecting the continued operation of the other unit on the same vehicle. Nonetheless, if desired, there may be a central control unit, linked to the front and rear transceiver units, responsible for interrogating the trackside transponders and for processing the incoming data. Alternatively, all the processing and control circuits may be incorporated in one of the two units on each vehicle.

## Claims

1. A vehicle control system for track-based vehicles, comprising, for each vehicle (7,8) , means (13) for interrogating transponders (12) disposed at intervals along the track (6) to obtain own vehicle position, means for determining own vehicle speed (14,15), radio means (14,15) for communicating with a neighbouring vehicle to derive the speed and position of that neighbouring vehicle, and control means (27) responsive to the speed and position of the two vehicles (7,8) to determine whether a hazardous situation exists and to provide a warning or control output (28) accordingly.

2. A control system according to Claim 1, wherein said radio means comprises a transmitter (14) directed rearward towards any rearward neighbouring vehicle (7) to transmit position and speed information, and a receiver (15) directed forward towards any forward neighbouring vehicle (8) to receive position and speed information from that forward vehicle (8).

3. A control system according to Claim 2, wherein at least one of said transmitter (14) and said receiver (15) is part of a unit (10,11) adapted to determine own vehicle speed by measurement of doppler frequency.

4. A control system according to Claim 2 or Claim 3, wherein at least one of said transmitter (14) and said receiver (15) is part of a unit (10,11) adapted to interrogate said transponders (12).

5. A control system according to any one of Claims 2 to 4, wherein said receiver (15) and said transmitter (14) are disposed relatively forward and rearward on the vehicle respectively.

6. A control system according to Claim 5, wherein said receiver (15) is associated with a forward-directed transmitter (15), the rearward transmitter (14) being associated with an adjacent transponder (29) mounted on the vehicle (8) , said adjacent transponder (29) being disabled when illuminated by the output signal of said rearward transmitter (14) and enabled in the absence of such illumination to emit a fault signal when interrogated by the forward-directed transmitter (15) of a rearward neighbouring vehicle (7), said control means (27) being responsive to said fault signal.

7. A control system according to Claim 6, wherein said adjacent transponder (29) is adapted to reflect an incident interrogating signal at the incident frequency when in the disabled state, and to emit a fault signal of frequency higher than said incident frequency when in the enabled state.

8. A control system according to any one of the preceding claims, wherein the track transponders (12) also provide local track layout information.

9. A control system according to any one of the preceding claims, wherein the track transponders (12) also provide local speed restriction information.

10. A control system according to Claim 8, wherein said control means is responsive to a plurality of transmitters disposed along the track, each transmitter being associated with a local set of track switching points and being adapted to emit a localised output signal indicative of the state of its switching points.

11. A control system according to Claim 10, wherein said control means is adapted to receive data relating to the intended route of the host vehicle, to determine from the received position, track layout and points data the actual route which will be taken, and to provide a warning or control output when the two routes differ.

12. A control system according to Claim 10, wherein said control means is adapted to determine from the received position, track layout and points data the route which will be taken by the host vehicle, and to determine, in respect of a forward neighbouring vehicle which has communicated its position and speed, whether that neighbouring vehicle is following said route.

FIG.1

FIG.2